# EUROPEAN PATENT APPLICATION

(11) **EP 4 583 033 A1**
(43) Date of publication of application: **09.07.2025**
(21) Application number: 22956693.0
(22) Date of filing: 30.08.2022
(51) Int. Cl.: G06Q 50/06

(54) **ELECTRIC VEHICLE CHARGING MANAGEMENT DEVICE, ELECTRIC VEHICLE CHARGING MANAGEMENT METHOD, AND PROGRAM**

(71) Applicant: Hitachi Astemo, Ltd., Ibaraki 312-8503 (JP)
(72) Inventor: HOSODA Junko, Tokyo 100-8280 (JP); NAGAHARA Satoshi, Tokyo 100-8280 (JP); DONG Hang, Tokyo 100-8280 (JP); KURITA Norio, Tokyo 105-6409 (JP); HE Qian, Tokyo 105-6409 (JP)
(74) Representative: MERH-IP Matias Erny Reichl Hoffmann Patentanwälte PartG mbB
(86) International application number: PCT/JP2022/032633
(87) International publication number: WO 2024/047762

(57) **Abstract**

To suppress concentration of charging for a plurality of electric vehicles (EV) and achieve leveling. An electric vehicle charging management device 10 that manages charging for a plurality of EVs 40, the electric vehicle charging management device including: a charging time zone information creation unit 121 that creates charging time zone information 1007 indicating a charging schedule for each of the plurality of EVs 40 by using delivery course information 1001 and vehicle information 1003; a power consumption amount calculation unit 122 that calculates time zone-based power consumption amount information 1008 indicating a power consumption amount including an execution charging amount in each of the plurality of time zones; and a charging time zone information change unit 123 that changes the charging time zone information 1007 by changing charging for a changing target electric EV in a maximum time zone that is a time zone having the largest power consumption amount among the plurality of time zones.

## Description

### Technical Field

The present invention relates to a technique for managing charging for an electric device including an electric vehicle and equipment. Note that the electric vehicle includes a so-called electric vehicle (EV), particularly a battery electric vehicle (BEV) , a plug-in hybrid vehicle (PHV) , and the like, and means a vehicle that can be charged from an external power source.

### Background Art

At present, electric vehicles are becoming widespread in order to deal with environmental problems. The electric vehicle needs to be charged from an external power source. In addition, in order to efficiently operate an electric vehicle, it is required to perform planned charging. In particular, in a case where a plurality of electric vehicles is handled by a transportation service provider such as a courier or a taxi company, a car rental company, a multi-unit residential building, or the like, the importance thereof increases.

PTL 1 proposes a charging management technique for improving an operation rate of electric vehicles. PTL 1 describes that "a vehicle management system that provides a service for renting a vehicle manages use and charging of electric vehicles 70 to 90 commonly used by a plurality of users. A renting vehicle is an electric vehicle using a storage battery as a power source, and its operation is controlled by an ECU. The renting vehicle is parked at a waiting place for renting and returning. In the vehicle management system, in a case where a use time zone corresponding to a reservation is within a charging time zone set in schedule information, a reservation acceptance unit 11 accepts the reservation when a use purpose is a non-traveling use".

### Citation List

### Patent Literature

PTL 1: JP 2022-22702 A

### Summary of Invention

### Technical Problem

Here, if the number of electric vehicles is increased or the operation rate is improved, a necessary power consumption amount is naturally increased. In this case, electricity charges naturally increase. In addition, a contract power amount is generally determined. Therefore, there is a possibility of exceeding the contract power amount in a time zone in which charging is concentrated.

However, in PTL 1, charging is performed during a reservation time, and an increase in power consumption amount cannot be suppressed. In particular, if the reservation time for charging is concentrated, the power amount during the reservation time may increase.

In this regard, an object of the present invention is to ensure an operation rate of an electric vehicle while suppressing concentration of charging, that is, a power consumption amount.

### Solution to Problem

In order to solve the above problem, in the present invention, peak concentration of the power consumption amount in each time zone is suppressed by changing at least a partial time zone of charging in the power consumption amount in a maximum time zone.

More specifically, the present invention is an electric vehicle charging management device that manages charging for a plurality of electric vehicles, the electric vehicle charging management device including: an input unit that receives travel course information indicating travel schedules of the plurality of electric vehicles, vehicle information indicating performance regarding charging for the plurality of electric vehicles, and charging facility information indicating charging performance of a charging facility that charges the plurality of electric vehicles; a charging time zone information creation unit that calculates an execution charging amount for each of the plurality of electric vehicles by using the travel course information and the vehicle information, calculates an execution charging time for the plurality of electric vehicles by using the execution charging amount and the charging facility information, and creates charging time zone information indicating a charging schedule for each of the plurality of electric vehicles on the basis of the execution charging time; a power consumption amount calculation unit that calculates time zone-based power consumption amount information indicating a power consumption amount in a predetermined unit of management including the execution charging amount in each of a plurality of time zones, on the basis of the charging time zone information; and a charging time zone information change unit that specifies, from the plurality of time zones, a maximum time zone that is a time zone with a largest power consumption amount among the power consumption amounts, selects a changing target electric vehicle of charging in the maximum time zone from the plurality of electric vehicles, and changes the charging time zone information by changing charging for the selected changing target electric vehicle in the maximum time zone.

In addition, the present invention also includes an electric vehicle charging management method using the electric vehicle charging management device and a program for causing a computer to function as the electric vehicle charging management device. Furthermore, a storage medium that stores the present program is also included in the present invention.

### Advantageous Effects of Invention

According to the present invention, it is possible to suppress concentration of a power consumption amount including charging.

### Brief Description of Drawings

[FIG. 1] FIG. 1 is a system configuration diagram according to an embodiment of the present invention.
[FIG. 2] FIG. 2 is a functional block diagram of a vehicle management system according to the embodiment of the present invention.
[FIG. 3] FIG. 3 is a hardware configuration diagram of an electric vehicle charging management device according to the embodiment of the present invention.
[FIG. 4] FIG. 4 is a diagram illustrating delivery course information used in the embodiment of the present invention.
[FIG. 5] FIG. 5 is a diagram illustrating delivery power variation information used in the embodiment of the present invention.
[FIG. 6] FIG. 6 is a diagram illustrating vehicle information used in the embodiment of the present invention.
[FIG. 7] FIG. 7 is a diagram illustrating charging facility information used in the embodiment of the present invention.
[FIG. 8] FIG. 8 is a diagram illustrating vehicle/delivery course assignment information used in the embodiment of the present invention.
[FIG. 9] FIG. 9 is a diagram illustrating vehicle/delivery power variation information used in the embodiment of the present invention.
[FIG. 10] FIG. 10 is a diagram illustrating charging time zone information used in the embodiment of the present invention.
[FIG. 11] FIG. 11 is a diagram illustrating time zone-based power consumption amount information used in the embodiment of the present invention.
[FIG. 12] FIG. 12 is a flowchart illustrating a processing flow according to the embodiment of the present invention.
[FIG. 13] FIG. 13 is a flowchart illustrating details of charging time zone information creation processing, power consumption amount calculation processing, and charging time zone information change processing according to the embodiment of the present invention.
[FIG. 14A] FIG. 14A is a diagram illustrating a power consumption amount for each time zone before a shift (movement) of charging according to the embodiment of the present invention.
[FIG. 14B] FIG. 14B is a diagram illustrating the power consumption amount for each time zone after the shift (movement) of charging according to the embodiment of the present invention.
[FIG. 15] FIG. 15 is a diagram illustrating an example of a display screen according to the embodiment of the present invention.
[FIG. 16] FIG. 16 is a flowchart illustrating details of update processing according to the embodiment of the present invention.

### Description of Embodiments

Hereinafter, an embodiment of the present invention will be described. In the present embodiment, charging for an electric vehicle (hereinafter, referred to as EV) by a courier, which is a type of transportation service provider, is targeted. In addition, it is assumed that a plurality of EVs are possessed and a plurality of delivery bases are provided. Furthermore, the courier is assumed to provide a charging facility in a charging base such as a delivery base or a charging station and charge the EV. That is, the delivery base can be used as a charging base. Based on the above premise, in the present embodiment, management of charging of each EV is implemented.

### <Configuration>

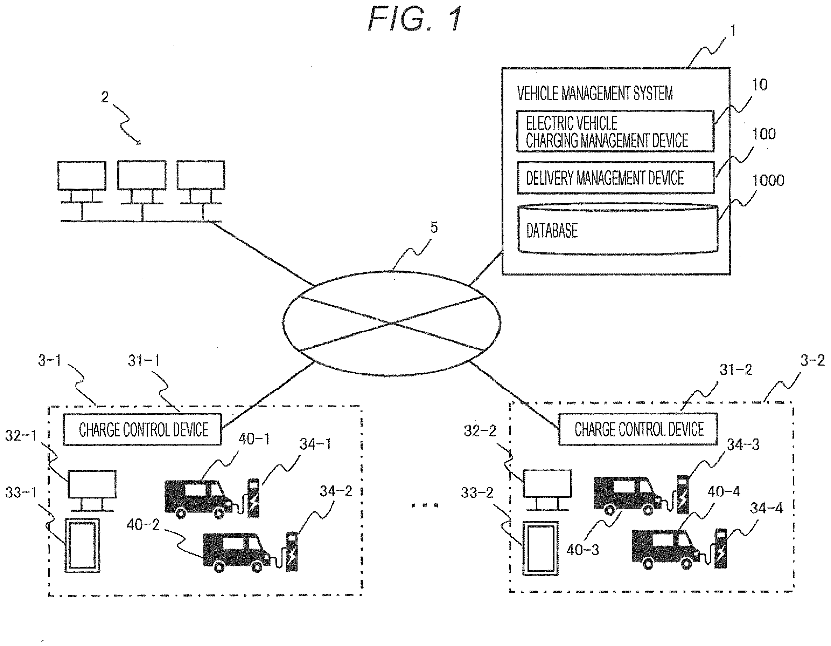

FIG. 1 is a system configuration diagram according to the present embodiment. In FIG. 1, devices including a vehicle management system 1, an administrator terminal group 2, and charging bases 3-1 and 3-2 are connected via a network 5.

First, the vehicle management system 1 is a system that implements charge management for the EV. For this purpose, the vehicle management system 1 includes an electric vehicle charging management device 10, a delivery management device 100, and a database 1000, and can be implemented as a computer system provided in a so-called data center.

Here, the electric vehicle charging management device 10 creates or changes charging time zone information indicating a charging schedule for the EV. In addition, the electric vehicle charging management device 10 also manages creation, update, and the like of various types of information used in these processes. In addition, the delivery management device 100 executes information processing for managing home delivery business itself such as creation of a home delivery schedule. Furthermore, the database 1000 stores various types of information used by the electric vehicle charging management device 10 or the delivery management device 100. Hereinafter, details of the vehicle management system 1 will be described.

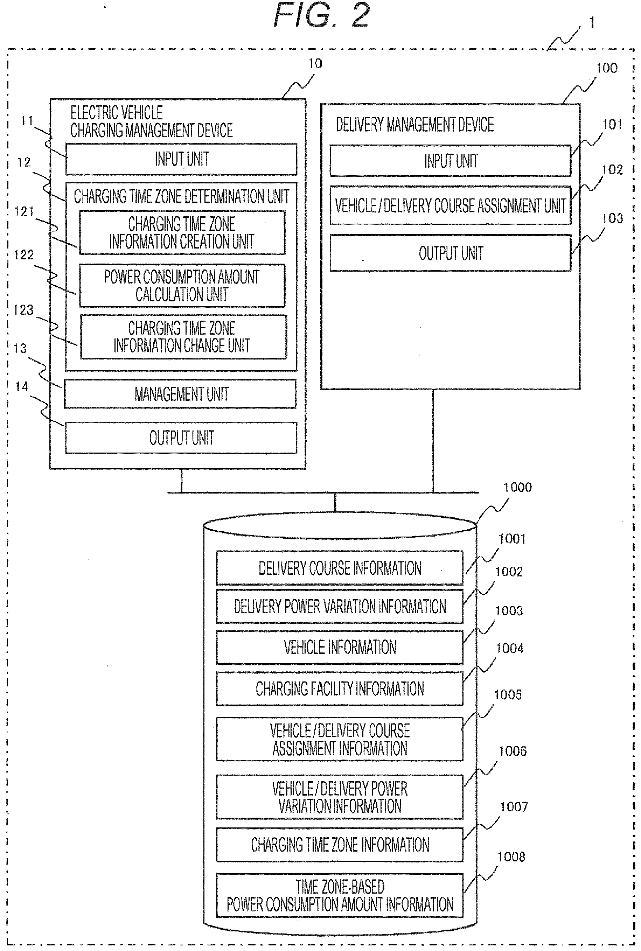

FIG. 2 is a functional block diagram of the vehicle management system 1 according to the present embodiment. In FIG. 2, the electric vehicle charging management device 10, the delivery management device 100, and the database 1000 are connected to each other via a communication path. However, the vehicle management system 1 is not limited to this mode. For example, the electric vehicle charging management device 10 and the delivery management device 100 may be integrally configured, or the information stored in the database 1000 may be stored in an internal storage device of the electric vehicle charging management device 10 or the delivery management device 100. Each device will be described below.

First, the electric vehicle charging management device 10 includes an input unit 11, a charging time zone determination unit 12, a management unit 13, and an output unit 14. The input unit 11 receives information and various instructions used by the electric vehicle charging management device 10.

In addition, the charging time zone determination unit 12 creates or changes charging time zone information indicating a charging schedule. For this purpose, the charging time zone determination unit 12 includes a charging time zone information creation unit 121, a power consumption amount calculation unit 122, and a charging time zone information change unit 123. The charging time zone information creation unit 121 creates the charging time zone information from the operation schedule of an EV or the like. In addition, the power consumption amount calculation unit 122 calculates the power consumption amount for each time zone on the basis of the created charging time zone information. Furthermore, the charging time zone information change unit 123 corrects or changes the created charging time zone information on the basis of the calculated power consumption amount. At this time, the charging time zone information change unit 123 changes the charging time zone information so as to suppress concentration of the power consumption amount, particularly to level the power consumption amount. Note that the processing in the charging time zone information creation unit 121, the power consumption amount calculation unit 122, and the charging time zone information change unit 123 can also be described as creating and confirming the charging time zone information.

In addition, the management unit 13 executes management such as creation and update of various types of information used in the charging time zone determination unit 12. In addition, a processing result or the like in the charging time zone determination unit 12 is output. Note that processing in the charging time zone determination unit 12 or the management unit 13 is the main processing of the present embodiment, and details thereof will be described later.

In addition, the delivery management device 100 executes information processing for managing home delivery business itself such as creation of a home delivery schedule. For this purpose, the delivery management device 100 includes an input unit 101, a vehicle/delivery course assignment unit 102, and an output unit 103. Similarly to the input unit 11, the input unit 101 receives information and various instructions used by the delivery management device 100.

In addition, the vehicle/delivery course assignment unit 102 creates vehicle/delivery course assignment information indicating a delivery schedule according to the order information and the like received by the input unit 101. Furthermore, the vehicle/delivery course assignment unit 102 may create a delivery instruction for each driver according to the vehicle/delivery course assignment information. In addition, the output unit 103 outputs the vehicle/delivery course assignment information itself and the delivery instruction corresponding thereto.

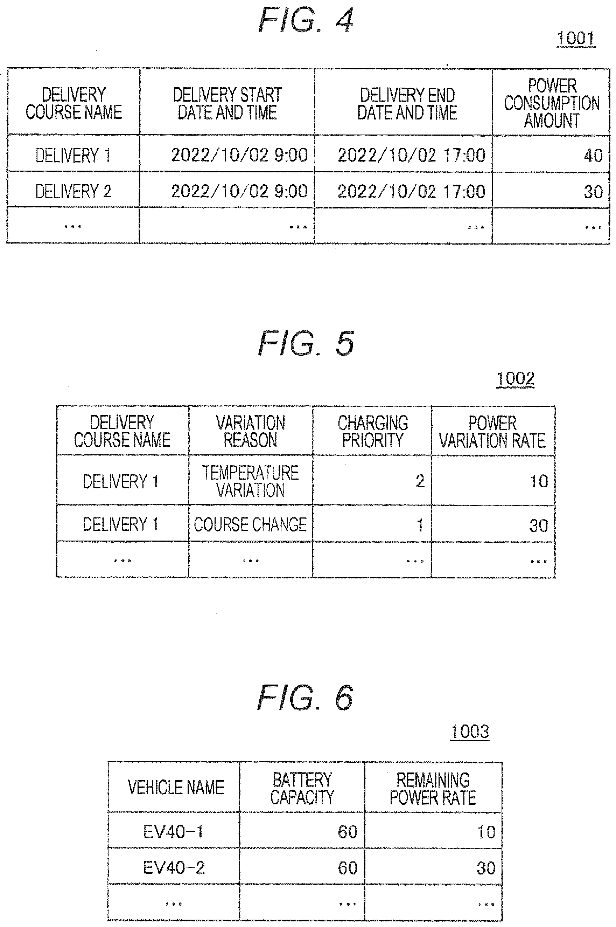

In addition, the database 1000 is a storage device that stores various types of information handled by the vehicle management system 1. Specifically, the database 1000 stores delivery course information 1001, delivery power variation information 1002, vehicle information 1003, charging facility information 1004, vehicle/delivery course assignment information 1005, vehicle/delivery power variation information 1006, charging time zone information 1007, and time zone-based power consumption amount information 1008. Note that these pieces of information will be described later with reference to FIGS. 4 to 11.

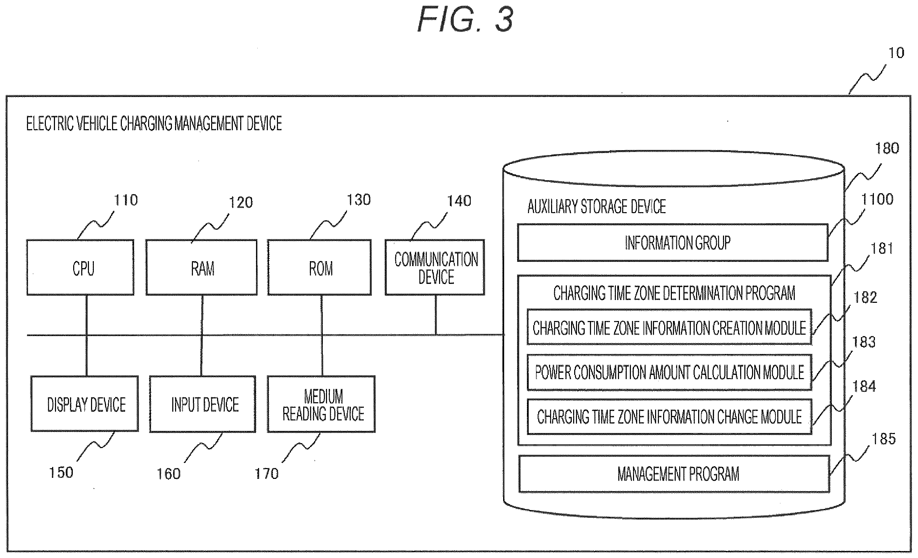

Here, the electric vehicle charging management device 10 and the delivery management device 100 can be implemented by a computer such as a server. Hereinafter, one implementation example will be described. FIG. 3 is a hardware configuration diagram of the electric vehicle charging management device 10 according to the present embodiment. In FIG. 3, the electric vehicle charging management device 10 includes a CPU 110, a RAM 120, a ROM 130, a communication device 140, a display device 150, an input device 160, a medium reading device 170, and an auxiliary storage device 180. Each of these configurations will be described below.

First, the central processing unit (CPU) 110 can be implemented by a so-called processor, and is a unit that executes various computations. The CPU 110 executes various types of processing by executing a charging time zone determination program 181 and a management program 185 loaded from the auxiliary storage device 180 to the RAM 120. Note that these various types of processing correspond to the processing of the charging time zone determination unit 12 and the management unit 13 in FIG. 2, and details thereof will be described later with reference to a flowchart.

In addition, the random access memory (RAM) 120 is a memory that stores programs, such as the charging time zone determination program 181 and the management program 185, executed by the CPU 110, and information necessary for executing the programs. Further, the read only memory (ROM) 130 is a memory that stores a program and the like necessary for starting the electric vehicle charging management device 10 which is a computer.

In addition, the communication device 140 is a device that transmits and receives data to and from an external device. For this purpose, the communication device 140 is connected to the network 5, and can be implemented by, for example, a device such as a wired LAN, a wireless LAN, a dial-up router, or an infrared communication device. Note that the network 5 is connected to an external device such as the administrator terminal group 2, and can be implemented by the Internet or an intranet of the courier.

In addition, the display device 150 outputs a processing result or the like in the CPU 110. The display device 150 can be implemented by, for example, a CRT display, a liquid crystal display (LCD), an organic electro luminescence (EL) display, or the like. In addition, the input device 160 is a device that receives an operation of the electric vehicle charging management device 10 from a user. The input device 160 can be implemented by, for example, a keyboard, a mouse, a microphone, or the like. In addition, the medium reading device 170 can be implemented by a device that reads information of a portable storage medium having portability such as a CD-ROM. Note that in a case where the electric vehicle charging management device 10 is implemented by the server as in the present embodiment, the display device 150, the input device 160, and the medium reading device 170 can be omitted.

In addition, the auxiliary storage device 180 can be implemented by, for example, a hard disk drive (HDD) or the like, and is a device that stores data and programs for executing various types of processing. The auxiliary storage device 180 may be implemented by a solid state drive (SSD) using a flash memory or the like.

Then, the auxiliary storage device 180 stores an information group 1100, a charging time zone determination program 181, and a management program 185. Here, the information group 1100 indicates at least one of the delivery course information 1001, the delivery power variation information 1002, the vehicle information 1003, the charging facility information 1004, the vehicle/delivery course assignment information 1005, the vehicle/delivery power variation information 1006, the charging time zone information 1007, or the time zone-based power consumption amount information 1008. It is sufficient that these may be stored in either the database 1000 or the auxiliary storage device 180. In addition, the delivery management device 100 may store the information group 1100.

In addition, the charging time zone determination program 181 is a program for causing the CPU 110 to execute processing in the charging time zone determination unit 12 of FIG. 2. Then, the charging time zone determination program 181 includes a charging time zone information creation module 182, a power consumption amount calculation module 183, and a charging time zone information change module 184. These types of processing correspond to the processing in the charging time zone information creation unit 121, the power consumption amount calculation unit 122, and the charging time zone information change unit 123. That is, the processing in the charging time zone determination program 181 corresponds to the processing in the charging time zone determination unit 12. Note that the charging time zone information creation module 182, the power consumption amount calculation module 183, and the charging time zone information change module 184 may be implemented by independent programs. In addition, the management program 185 is a program for executing the processing of the management unit 13.

Here, the charging time zone determination program 181 and the management program 185 are, for example, application programs that can be executed on an operating system (OS) program. In addition, the charging time zone determination program 181 and the management program 185 may be installed from a portable storage medium to the auxiliary storage device 180 via the medium reading device 170, for example. That is, the charging time zone determination program 181 and the management program 185 can be stored in the storage medium. Note that the CPU 110 may execute processing according to a program other than the charging time zone determination program 181 and the management program 185. In this case, it is desirable to store this program in the auxiliary storage device 180.

Note that the delivery management device 100 also has a similar configuration illustrated in FIG. 2, and can adopt a configuration that stores a program corresponding to the vehicle/delivery course assignment unit 102.

The description of FIG. 3 ends as above, and the description of FIG. 1 will be continued. In FIG. 1, the administrator terminal group 2 is a terminal device used by an employee of the courier, and can be implemented by a computer that executes information processing for supporting home delivery business. The administrator terminal group 2 can realize management of a home delivery schedule, sales management, labor management, and the like. In particular, in the present embodiment, the administrator terminal group 2 receives an instruction to the electric vehicle charging management device 10 or the delivery management device 100 and outputs a processing result thereof. Note that the administrator terminal group 2 may be provided with the functions of the electric vehicle charging management device 10 or the delivery management device 100. In this case, the electric vehicle charging management device 10 or the delivery management device 100 can be omitted.

In addition, a charging facility is provided in each of the charging bases 3-1 and 3-2. Specifically, charge control devices 31-1 and 31-2 and charging devices 34-1 and 34-2 are provided. Furthermore, in the charging bases 3-1 and 3-2, base terminals 32-1 and 32-2 and tablets 33 -1 and 33-2 are also used. Here, the charge control devices 31-1 and 31-2 receive the charging time zone information in the corresponding charging bases 3-1 and 3-2 from the electric vehicle charging management device 10, and execute processing for charging corresponding thereto. The processing for charging includes charging control, preparation for charging, and output of a charging schedule to the base terminals 32-1 and 32-2 and the tablets 33-1 and 33-2. As described above, the base terminals 32-1 and 32-2 and the tablets 33-1 and 33-2 are used by the drivers of EVs 40-1 to 40-4 and employees at the charging base to execute home delivery business. Note that the charging bases 3-1 and 3-2 may be delivery bases as described above, or may be bases dedicated to charging such as a charging station.

Then, the charging devices 34-1 and 34-2 charge the EVs 40-1 to 40-4 according to processing in the charge control devices 31-1 and 31-2 and the base terminals 32-1 and 32-2, and the tablets 33-1 and 33-2 or an operation of an operator.

In addition, it is desirable that the charge control devices 31-1 and 31-2 detect a charging amount (actual measurement value) of the EVs 40-1 to 40-4. Then, the charge control devices 31-1 and 31-2, the base terminals 32-1 and 32-2, and the tablets 33-1 and 33-2 notify the electric vehicle charging management device 10 of this. Therefore, the base terminals 32-1 and 32-2 and the tablets 33-1 and 33-2 can be connected to the network 5. In order to implement these functions, the base terminals 32-1 and 32-2 and the tablets 33-1 and 33-2 can be implemented by a computer. Furthermore, the base terminals 32-1 and 32-2, the tablets 33-1 and 33-2, and the charge control devices 31-1 and 31-2 may be provided with the functions of the electric vehicle charging management device 10 or the delivery management device 100. In this case, the electric vehicle charging management device 10 or the delivery management device 100 can be omitted. Furthermore, an in-vehicle terminal may be provided in the EVs 40-1 to 40-4, and the functions of the base terminals 32-1 and 32-2 and the tablets 33-1 and 33-2 may be executed by the in-vehicle terminal. In addition, the charging device 34 may be caused to execute the functions of the base terminals 32-1 and 32-2 and the tablets 33-1 and 33-2.

The description of the configuration of the present embodiment ends as above, but the number of the charging bases 3-1 and 3-2 or the charging devices 34-1 to 34-4 is not limited to the illustrated number. In addition, hereinafter, in a configuration to which branch numbers such as the charging bases 3-1 and 3-2 are assigned, in a case where it is not necessary to distinguish individual devices, reference numerals are given with the branch numbers (from the hyphen onwards) omitted.

### <Information>

Next, each piece of information used in the present embodiment will be described. First, FIG. 4 is a diagram illustrating the delivery course information 1001 used in the present embodiment. The delivery course information 1001 is information indicating a delivery schedule in home delivery and a power consumption amount necessary for the delivery. Therefore, for example, as illustrated in FIG. 4, the delivery course information 1001 includes items of a delivery course name, a delivery start date and time, a delivery completion date and time, and a power consumption amount. The delivery course name is an item for identifying a delivery course indicating the unit of delivery unit. In addition, the delivery start date and time and the delivery end date and time are items indicating scheduled dates and times of the start and end of the delivery, respectively. Furthermore, the power consumption amount indicates a power consumption amount required by an EV in the corresponding delivery course.

Note that, in the present embodiment, the delivery course information 1001 is used since a courier is targeted. Therefore, the delivery course information 1001 is merely an example of the travel course information indicating a travel schedule of EVs. Furthermore, the present invention can also be applied to devices and facilities other than EVs. Therefore, the travel course information is an example of device operation information indicating the operation schedule of devices and the facilities.

FIG. 5 is a diagram illustrating the delivery power variation information 1002 used in the present embodiment. The delivery power variation information 1002 is information regarding a variation in charging for each delivery course. Therefore, for example, as illustrated in FIG. 5, the delivery power variation information 1002 includes items of a delivery course name, a variation reason, a charging priority, and a power variation rate. The delivery course name is an item for identifying a delivery course indicating the unit of delivery unit. The variation reason indicates a reason why the power consumption amount required for the corresponding delivery course varies. For example, "temperature variation" in the first record means that a load on an air conditioner increases or a load on a battery of an EV increases as a temperature rises. Note that, even in one delivery course, there may be a plurality of variation reasons.

In addition, the charging priority indicates a priority of charging in a case where the corresponding variation reason occurs. That is, the example of FIG. 5 indicates that a priority in a case where "temperature variation" occurs is lower than a priority in a case where "course change" occurs. However, the charging priority may be set for each delivery course regardless of the variation reason. In addition, the power variation rate indicates a ratio of variation of the power consumption amount generated in a case where the corresponding variation reason occurs. This ratio indicates a variation ratio, particularly an increase ratio, with respect to the power consumption amount of the delivery course information 1001.

Note that, in the present embodiment, the delivery power variation information 1002 is used since a courier is targeted. Therefore, the delivery power variation information 1002 is merely an example of travel power variation information indicating information regarding a variation in charging for each travel course of an EV. In addition, the travel power variation information is also an example of operating power variation information regarding a variation in charging for each delivery course of a device or facility.

In addition, FIG. 6 is a diagram illustrating the vehicle information 1003 used in the present embodiment. The vehicle information 1003 is information indicating the performance regarding charging for each EV. Therefore, for example, as illustrated in FIG. 6, the vehicle information 1003 includes items of a vehicle name, a battery capacity, and a remaining power rate. The vehicle name is an item for identifying an EV. The battery capacity and the remaining power rate indicate the battery capacity of the corresponding EV (vehicle) and the remaining amount or the remaining rate thereof, respectively. Note that the present invention can also be applied to a device and a facility other than an EV. Therefore, the vehicle information 1003 is merely an example of device information indicating the performance regarding charging of devices and facilities including the EV.

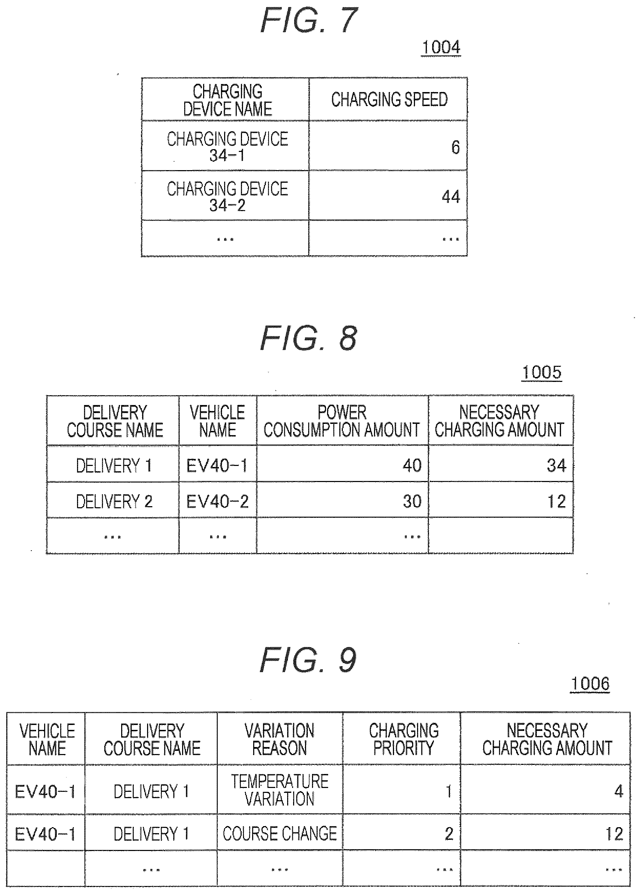

In addition, FIG. 7 is a diagram illustrating the charging facility information 1004 used in the present embodiment. The charging facility information 1004 is information indicating charging performance for each charging facility. Therefore, for example, as illustrated in FIG. 7, the charging facility information 1004 includes items of a charging device name and a charging speed. The charging device name is information for identifying a charging device that performs charging. In addition, the charging speed is information indicating a charging speed of the corresponding charging device. Note that in the present example, the charging device is used as the charging facility, but information including a charge control device may be used, or information for each of the charging bases 3-1 and 3-2 may be used.

FIG. 8 is a diagram illustrating the vehicle/delivery course assignment information 1005 used in the present embodiment. The vehicle/delivery course assignment information 1005 is information regarding an EV used in a delivery course and its electric power. Therefore, for example, as illustrated in FIG. 8, the vehicle/delivery course assignment information 1005 includes items of a delivery course name, a vehicle name, a power consumption amount, and a necessary charging amount.

Here, the delivery course name is an item for identifying a delivery course. The vehicle name identifies an EV that performs delivery in the corresponding delivery course. The power consumption amount indicates a power consumption amount required by the EV in the corresponding delivery course. Furthermore, the necessary charging amount indicates a charging amount necessary for the corresponding EV in order to perform delivery in the corresponding delivery course.

Note that, in the present embodiment, the vehicle/delivery course assignment information 1005 is used since a courier is targeted. Therefore, the vehicle/delivery course assignment information 1005 is merely an example of vehicle/travel course assignment information regarding an EV used in a travel course and its electric power. In addition, the present invention can also be applied to a device and a facility other than an EV. Therefore, the vehicle/travel course assignment information is an example of device/operation assignment information regarding electric power in operation in a device or facility including an EV.

In addition, FIG. 9 is a diagram illustrating the vehicle/delivery power variation information 1006 used in the present embodiment. The vehicle/delivery power variation information 1006 is information regarding a variation in charging for each EV or delivery course. Therefore, for example, as illustrated in FIG. 9, the vehicle/delivery power variation information 1006 includes items of a vehicle name, a delivery course name, a variation reason, a charging priority, and a necessary charging amount. The vehicle name is an item for identifying an EV. The delivery course name is an item for identifying a delivery course of the corresponding EV. The variation reason indicates a reason why the power consumption amount required for the corresponding EV in the delivery course varies. Note that, even in one delivery course, there may be a plurality of variation reasons. In addition, the charging priority indicates a priority of charging in a case where the corresponding variation reason occurs. Furthermore, the necessary charging amount indicates a charging amount necessary for the corresponding EV in order to perform delivery in the corresponding delivery course.

Note that, in the present embodiment, the vehicle/delivery power variation information 1006 is used since a courier is targeted. Therefore, the vehicle/delivery power variation information 1006 is merely an example of vehicle/travel power variation information regarding a variation in charging for each EV or delivery course. In addition, the present invention can also be applied to a device and a facility other than an EV. Therefore, the vehicle/travel power variation information is an example of device/operating power variation information regarding electric power and regarding a variation in charging with respect to an operation in a device or facility including an EV.

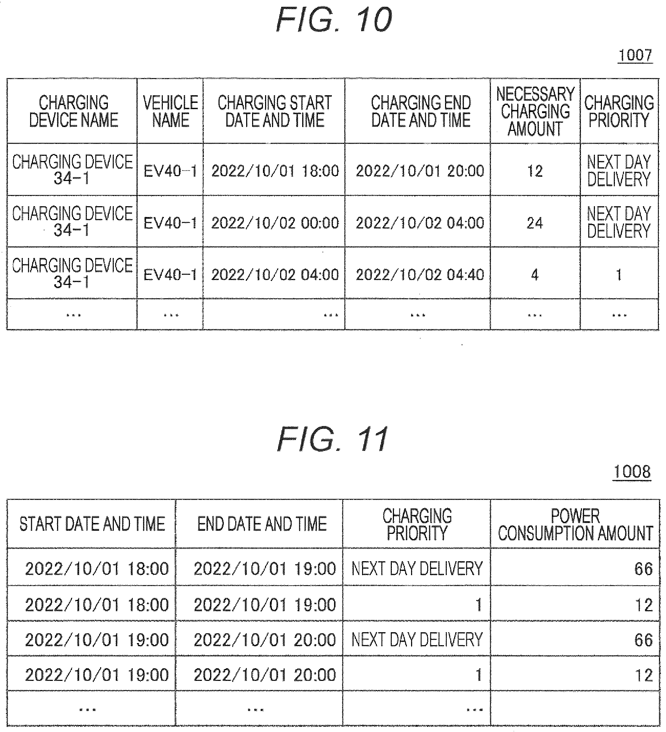

In addition, FIG. 10 is a diagram illustrating the charging time zone information 1007 used in the present embodiment. The charging time zone information 1007 is information indicating a charging schedule for each EV. Therefore, for example, as illustrated in FIG. 10, the charging time zone information 1007 includes items of a charging device name, a vehicle name, a charging start date and time, a charging end date and time, a necessary charging amount, and a charging priority for each charging (unit). The charging device name is information for identifying a charging device that performs charging. The vehicle name identifies the EV to be a target of the corresponding charging. The charging start date and time and the charging completion date and time are items indicating scheduled dates and times of start and end of charging, respectively. The necessary charging amount indicates the charging amount required, that is, executed in the corresponding charging. Furthermore, the charging priority indicates the priority of the corresponding charging. Note that the purpose of charging such as next day delivery may be recorded as the priority. In this case, in a case where the purpose is recorded, it is desirable to set the corresponding priority as the highest priority.

Note that the present invention can also be applied to a device and a facility other than an EV. As the vehicle name, an item for identifying a device or a facility including an EV may be used. In addition, note that in the present example, the charging device is used as the charging facility, but information including a charge control device may be used, or information for each of the charging bases 3-1 and 3-2 may be used.

FIG. 11 is a diagram illustrating the time zone-based power consumption amount information 1008 used in the present embodiment. The time zone-based power consumption amount information 1008 is information indicating a power consumption amount in the unit of management such as a charging facility (charging device) or a charging base for each time zone. Therefore, for example, as illustrated in FIG. 11, the time zone-based power consumption amount information 1008 includes items of a start date and time, an end date and time, a charging priority, and a power consumption amount for each charging. The start date and time and the end date and time are items that define a range of a time zone in which the corresponding charging is executed. The charging priority indicates the priority of the corresponding charging. Furthermore, the power consumption amount indicates charging used in the corresponding charging or a power amount used in a charging base for lighting or the like. Note that, in the present example, a record is provided for each charging, but the record may be provided for each time zone. In this case, the power consumption amount indicates the sum of the power amounts used for the charging and in the charging base. The description of the information used in the present embodiment ends as above, but these pieces of information may be at least partially merged and collected, or may be divided. In particular, when merged, common items can be shared.

### <Processing Flow>

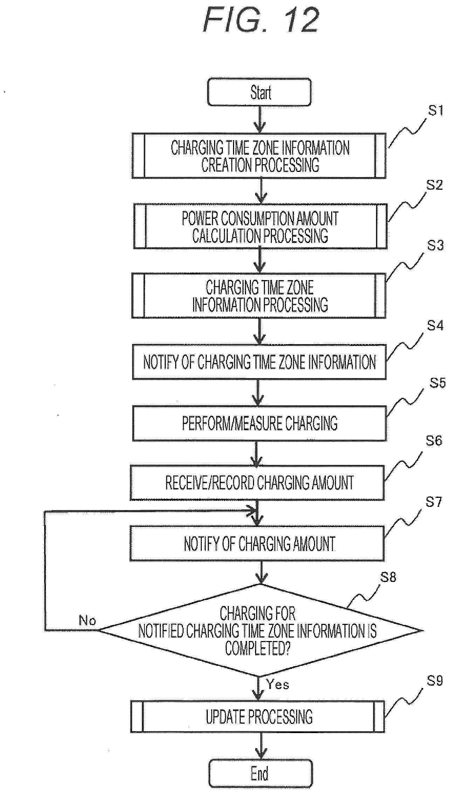

Next, a processing flow in the present embodiment will be described. At that time, as a processing subject of the processing flow, each unit of FIG. 2 and each device of FIG. 1 will be described. FIG. 12 is a flowchart illustrating the processing flow in the present embodiment.

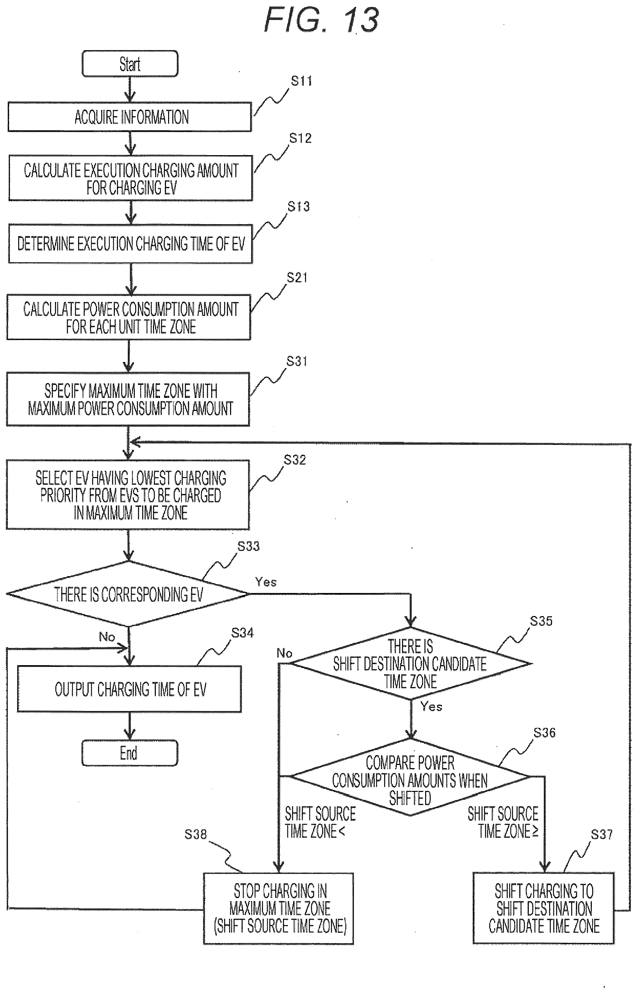

First, in step S1, the charging time zone information creation unit 121 creates the charging time zone information 1007. In step S2, the power consumption amount calculation unit 122 calculates the time zone-based power consumption amount information 1008 indicating a power consumption amount in a predetermined unit of management for each time zone, on the basis of the charging time zone information 1007. In step S3, the charging time zone information change unit 123 changes the charging time zone information 1007 on the basis of the time zone-based power consumption amount information 1008. Details of steps S1 to S3 will be described later with reference to FIG. 13.

Next, in step S4, the output unit 14 notifies the charge control device 31 of the corresponding unit of management, that is, the charging base 3 of the changed, that is, the confirmed charging time zone information 1007.

In addition, in step S5, the charging device 34 charges an EV 40 according to the notified charging time zone information 1007 in response to a control instruction of the charge control device 31 or the like or an operation of the operator. Then, the charging device 34 actually measures a charging amount in charging.

In addition, in step S6, the charging device 34 that has performed charging actually measures the charging amount in step S5 from the output of the charging amount (actual measurement value) actually measured by the charge control device 31. Then, the charge control device 31 records this.

In addition, in step S7, the charge control device 31 notifies the electric vehicle charging management device 10 of the recorded charging amount. Then, the input unit 11 of the electric vehicle charging management device 10 receives this. In addition, in step S8, the management unit 13 determines whether or not charging for the notified charging time zone information 1007 has been completed, by using the received charging amount. As a result, in a case where the charging has not been completed (No), the process proceeds to step S7. In addition, in a case where the charging has been completed (Yes), the process proceeds to step S9. Note that, in step S8, other conditions such as completion of charging for each of the EVs 40-1 to 40-4 and elapse of a predetermined period may be used. The vehicle/delivery power variation information 1006 is updated. More specifically, the necessary charging amount of the vehicle/delivery power variation information 1006

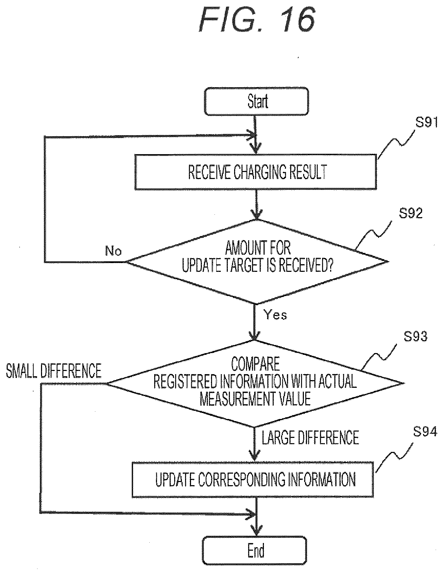

Then, in step S9, the management unit 13 updates at least one of the delivery course information 1001, the delivery power variation information 1002, or the vehicle information 1003, that is, information used to create the charging time zone information 1007, on the basis of the received charging amount. Note that details of the update processing in step S9 will be described later with reference to FIG. 16.

Here, details of steps S1 to S3, that is, the charging time zone information creation processing, the power consumption amount calculation processing, and the charging time zone information change processing will be described. FIG. 13 is a flowchart illustrating details of the charging time zone information creation processing, the power consumption amount calculation processing, and the charging time zone information change processing according to the present embodiment. Hereinafter, steps S11 to S13 correspond to step S1 of FIG. 12. In addition, step S21 corresponds to step S2. Furthermore, steps S31 to S38 correspond to step S3.

In step S11, the charging time zone information creation unit 121 acquires, from the database 1000 via the input unit 11, various types of information regarding the EV 40 as a charging target with respect to the charging base 3 serving as the unit of management. Then, the acquired information is the delivery course information 1001 to the charging facility information 1004. However, among these, the delivery course information 1001, the vehicle information 1003, and the charging facility information 1004 may be acquired in a limited manner.

In step S12, the charging time zone information creation unit 121 calculates an execution charging amount, which is the power consumption amount for each vehicle, using the acquired information. For this purpose, first, the charging time zone information creation unit 121 specifies the power consumption amount used for each delivery course by using the acquired delivery course information 1001.

Next, the charging time zone information creation unit 121 assigns delivery in each delivery course to the EV 40 which executes the delivery. For this purpose, the charging time zone information creation unit 121 can acquire assignment information in which the delivery course and the EV are associated with each other, in cooperation with the delivery management device 100. As the assignment information, the vehicle/delivery course assignment information 1005 itself may be used, or the delivery course name and the vehicle name of the vehicle/delivery course assignment information 1005 may be used. In addition, the charging time zone information creation unit 121 may acquire the assignment information from any of the administrator terminal group 2, on the basis of the input of the administrator, or the electric vehicle charging management device 10 or the database 1000 may store the assignment information in advance. Furthermore, the base terminal 32, the tablet terminal 33, or the like may be used.

Next, the charging time zone information creation unit 121 specifies the battery capacity and the remaining power rate of the assigned EV 40 from the acquired vehicle information 1003 . Then, using these, in the charging time zone information creation unit 121, the charging time zone information creation unit 121 calculates the remaining battery amount of the assigned EV 40.

Next, the charging time zone information creation unit 121 calculates a difference between the specified power consumption amount and the calculated remaining battery amount. This difference is calculated as a necessary charging amount in the EV 40, that is, an execution charging amount for charging the EV 40.

Then, the charging time zone information creation unit 121 organizes the above results to create the vehicle/delivery course assignment information 1005. As a result, the power consumption amount at the time of charging the EV 40 is calculated. However, in the calculation of the power consumption amount, it is more desirable to consider the variation reason of the power consumption amount in each EV or to calculate the power consumption amount for each charging priority. In this regard, in the following, a modification will be described in consideration of these.

First, processing in consideration of the variation reason of the power consumption amount will be described. The charging time zone information creation unit 121 specifies the delivery power variation information 1002 corresponding to the delivery course of the acquired delivery course information 1001. Then, the charging time zone information creation unit 121 specifies a variation reason of the specified delivery power variation information 1002.

In addition, the charging time zone information creation unit 121 specifies a power variation rate corresponding to the specified variation reason. Then, the charging time zone information creation unit 121 corrects the necessary charging amount (execution charging amount) of the EV 40 by using the specified power variation rate. As a result, a necessary charging amount reflecting variation in weather or the like is specified.

In addition, calculation for each charging priority will be described. The charging time zone information creation unit 121 specifies the delivery power variation information 1002 corresponding to the delivery course of the acquired delivery course information 1001. Then, the charging time zone information creation unit 121 specifies a charging priority of the specified delivery power variation information 1002.

In addition, the charging time zone information creation unit 121 collects the necessary charging amount calculated as described above for each specified charging priority. As a result, the necessary charging amount is calculated for each degree of importance of charging. Note that both the consideration of the variation reason of the power consumption amount and the calculation for each charging priority may be executed. The description of step S12 ends as above.

Next, in step S13, the charging time zone information creation unit 121 determines an execution charging time for executing charging for each the EV 40. That is, one or more time zones in which charging is executed are specified. For this purpose, the charging time zone information creation unit 121 specifies the charging device 34 that charges the EV 40. The specification of the charging device 34 may be selected from the charging base 3 that is the delivery base serving as the start position of the delivery course, or the administrator terminal group 2, the base terminal 32, the tablet terminal 33, or the like may be used. In addition, the charging time zone information creation unit 121 specifies the delivery start date and time of the delivery course assigned to the EV 40 by using the delivery course information 1001. Next, the charging time zone information creation unit 121 calculates a charging period indicating a length of time for charging the charging amount (power consumption amount) necessary for the target EV 40, based on the charging speed of the specified charging device 34.

Then, the charging time zone information creation unit 121 calculates a charging start date and time which allows charging to be completed by the specified delivery start date and time and the calculated charging time to be secured. That is, the calculation of charging start date and time = delivery start date and time - charging period (+α: buffer time) is executed. Then, the charging time zone information creation unit 121 adds the charging period to the calculated charging start date and time to calculate a charging end date and time. As a result, an execution charging time, from the charging start date and time to the charging end date and time, during which charging corresponding to the charging speed is executed for each unit time is determined. Note that the unit time zone means a predetermined time such as one hour, and more desirably coincides with the unit time of the charging speed.

As a result, the charging time zone information 1007 indicating the charging schedule for the EV 40 is created. That is, the processing of step S1 is executed. Note that in FIG. 10, the charging priority can be omitted.

Next, in step S21, the power consumption amount calculation unit 122 calculates a power consumption amount for each unit time zone in each execution charging time by using the charging time zone information 1007. For this purpose, the power consumption amount calculation unit 122 calculates a charging amount for each unit time zone in each charging device 34, based on the charging time zone information 1007. That is, the power consumption amount calculation unit 122 divides the necessary charging amount in each record of the charging time zone information 1007 by the number of time zones included from the charging end date and time to the charging start date and time. Then, the power consumption amount calculation unit 122 calculates the sum of the charging amounts for each unit time zone for each charging base 3. The sum is a power consumption amount in each unit time zone. Note that another power consumption amount for lighting or the like in the charging base 3 may be added to the power consumption amount for each unit time zone.

As a result, the power consumption amount calculation unit 122 creates the time zone-based power consumption amount information 1008. As described above, the processing of step S2 is executed.

Next, in step S31, the charging time zone information change unit 123 specifies a maximum time zone that is a unit time zone with a maximum power consumption amount among the power consumption amounts for unit time zones calculated in step S21. Note that the maximum power consumption amount may be a predetermined number of top power consumption amounts, or may be power consumption amounts exceeding a power amount threshold such as a contract power amount with an electric power company. That is, the number of maximum time zones may be plural.

In step S32, the charging time zone information change unit 123 selects an EV having a low charging priority from the EVs 40 scheduled to be charged in the maximum time zone. Here, the low charging priority indicates that the charging priority is equal to or less than a predetermined value or has a predetermined content, or has a predetermined order such as the lowest order.

In step S33, the charging time zone information change unit 123 determines whether there is the EV 40 corresponding to step S32. This determination means that it is determined whether there is an EV 40 which allows the charging during the maximum time zone to be changed. That is, the determination means whether the maximum time zone = the peak of the power consumption amount can be suppressed. As a result of this determination, in a case where there is the corresponding EV

(Yes), the process proceeds to step S35. That is, processing for changing the charging is performed. In addition, in a case where there is no corresponding EV (No), the process proceeds to step S34.

Note that in a case where the power amount threshold is not exceeded in step S31, step S32 may be skipped and the process may proceed to step S34. When a difference between the maximum power consumption amount and the average value satisfies a predetermined condition, for example, is equal to less than a predetermined value, the processing in step S33 may be omitted. In addition, in steps S32 and S33, the charging time zone information change unit 123 selects the EV 40 (changing target EV) which is a changing target for the charging in the maximum time zone.

Next, in step S34, the charging time zone information change unit 123 outputs the charging time of the EV, that is, a charging schedule via the output unit 14. This may be displayed on the administrator terminal group 2, the base terminal 32, or the tablet terminal 33, or may be displayed by the output unit 14 as a display device.

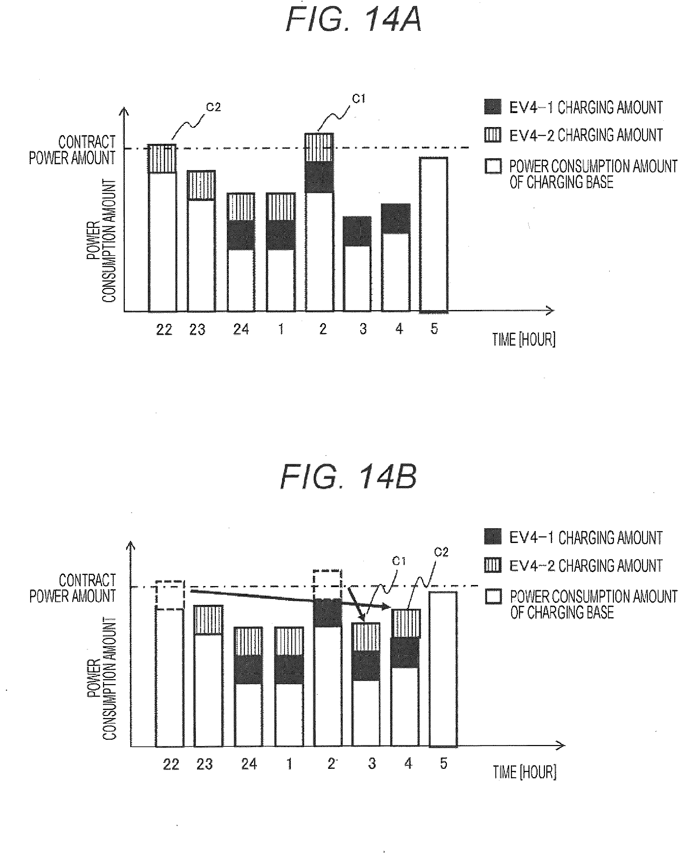

In step S35, the charging time zone information change unit 123 determines whether there is a shift destination candidate time zone of charging in the corresponding EV 40 specified in step S33. The shift destination candidate time zone indicates a candidate of a time zone of a shift destination (movement destination) of charging in the corresponding EV 40. Here, a concept of a shift (movement) of charging will be described with reference to FIGS. 14A and 14B.

First, FIG. 14A is a diagram illustrating a power consumption amount for each time zone before the shift (movement) of charging according to the present embodiment. In FIG. 14A, the power consumption amount in each time zone from 22: 00 to 5: 00 on the next day is indicated by a bar graph. The power consumption amount in each time zone is indicated by the sum of the power consumption amount of the charging base 3 itself and the charging amounts for the EVs 40-1 and 40-2 which are charging targets at the charging base 3. In addition, in the charging of the EV 40-1 and the EV 40-2, the charging priority of the EV 40-2 is assumed to be low.

Furthermore, in the present example, a time zone of exceeding the contract power amount which is an example of the power amount threshold is set as the maximum time zone. Therefore, in the example of FIG. 14A, 22:00 and 2:00 are specified as the maximum time zones. These can also be expressed as shift source time zones. Then, among the charging at 22:00 and 2:00, charging C1 and charging C2, which are charging amounts of the EV 40-2, are specified. Note that the charging time of the EV 40-2 is from 22:00 to 2:00.

Next, FIG. 14B is a diagram illustrating a power consumption amount for each time zone after the shift (movement) of charging according to the present embodiment. In the charging C1 and the charging C2 specified in FIG. 14A, the power consumption amount in the charging operation time zone (2: 00) of the charging C1 is large, so that this is preferentially shifted. That is, as illustrated in FIG. 14B, the charging C1 is shifted to 3: 00 which is a time zone (shift destination time zone) after the charging end time of the EV 40-2. As a result, the charging time of the EV 40-2 is changed to 23:00 to 3:00. Then, the charging C2 is shifted to a shift destination time zone which is a time zone (4: 00) after the changed charging time. As a result, as illustrated in FIG. 14B, the power consumption amount in each time zone can be lower than the contract power amount. In this way, the peak of the power consumption amount can be suppressed. As described above, in the present embodiment, the processing of allocating at least a part of the charging amount in the maximum time zone to another time zone is performed as the change.

The description of the concept of the shift (movement) of charging ends as above, and the description returns to step S35 of the flowchart of FIG. 13. Examples of a criterion for determination in step S35 include at least one of whether continuity of the charging time zone can be secured or whether charging can be completed by the delivery start date and time. Details of the determination processing using these examples will be described below.

First, the charging time zone information change unit 123 specifies the charging time zone of the corresponding EV 40, that is, the charging start date and time and the charging end date and time, based on the charging time zone information 1007. Next, the charging time zone information change unit 123 specifies time zones before and after the specified charging time. Next, the charging time zone information change unit 123 determines whether the time zone after the charging time is a time zone before the delivery start date and time, and obtains a first determination result.

In addition, in a case where the charging for the EV 40 in the maximum time zone is shifted to a time zone before or after the specified charging time, the charging time zone information change unit 123 determines whether continuity of the charging time can be secured. Here, the securing of continuity means that in a case where the charging for the EV 40 is shifted to either the preceding or following time zone, a predetermined number or more of time zones in which charging is not performed exist within the charging time. For example, in a case where there is one or more time zones in which charging is not performed, it can be determined that continuity cannot be secured. In addition, in a case where time zones in which charging is not performed are continuous, it may be determined that continuity cannot be secured. As a result, a second determination result is obtained.

Then, in a case where both the first determination result and the second determination result are satisfied, the charging time zone information change unit 123 determines that there is a shift destination candidate time zone. However, this determination is an example, and either the first determination result or the second determination result may be used. Furthermore, as a result of the shift, the charging start date and time may be determined by using whether the corresponding EV 40 is being delivered in another delivery course.

As a result of the above determination, in a case where there is the shift destination candidate time zone (Yes), the process proceeds to step S36. In addition, in a case where there is no shift destination candidate time zone (No), the process proceeds to step S38.

In addition, in step S36, the charging time zone information change unit 123 compares power consumption amounts when shifted. Specifically, the charging time zone information change unit 123 compares the following (1) and (2) .
(1) The power consumption amount in the shift source time when shifted. A value obtained by subtracting the shifted charging amount.
(2) The power consumption amount in the shift source time when shifted.

Here, (1) is a value obtained by subtracting the shifted charging amount from the initial power consumption amount, and indicates each of the power consumption amounts in the time zone of 22: 00 and the time zone of 2: 00 illustrated in FIG. 14B. In addition, (2) is a value obtained by adding the shifted charging amount to the initial power consumption amount, and indicates each of the power consumption amounts in the time zone of 4:00 and the time zone of 3:00 illustrated in FIG. 14B. Then, in these examples, the power consumption amounts in the time zones 22: 00 and 4:00 illustrated in FIG. 14B are compared, and the power consumption amounts in the time zones 2:00 and 3: 00 illustrated in FIG. 14B are compared.

As a result, in a case where the power consumption amount in the shift source time zone is equal to or larger than equal to or larger than the power consumption amount in the shift destination time zone (shift source time zone ≥) , the process proceeds to step S37. In addition, in a case where the power consumption amount in the shift source time zone is small (shift source time zone <), the process proceeds to step S38.

Note that, in step S36, the charging time zone information change unit 123 may make a determination by comparing the power consumption amount in each of the shift source time zone and the shift destination time zone after the shift with the power amount threshold which is the contract power amount as an example. For example, in a case where both the power consumption amount in the shift source time zone and the power consumption amount in the shift destination time zone are less than the power amount threshold, the process proceeds to step S37, and otherwise, the process proceeds to step S38. In addition, in a case where the power consumption amount in the shift source time zone is less than the power amount threshold, the process may proceed to step S37, and otherwise, the process may proceed to step S38. Furthermore, comparison of the power amount threshold and comparison of the shift destination time zone and the shift source time zone may be used together.

In step S37, the charging time zone information change unit 123 shifts the corresponding charging to the shift destination candidate time zone. As a result, the shift destination candidate time zone is confirmed as the shift destination time. In addition, the charging time zone information change unit 123 updates the charging time zone information 1007 so as to reflect the result of the shift. Then, the process proceeds to step S32.

In step S38, the charging time zone information change unit 123 stops the corresponding charging in the shift source time zone, that is, the maximum time zone. In addition, the charging time zone information change unit 123 updates the charging time zone information 1007 so as to reflect the result of the stop. That is, the charging time zone information change unit 123 deletes or invalidates the item indicating the corresponding charging from the charging time zone information 1007. Then, the process proceeds to step S34.

Then, in step S34, the charging time zone information change unit 123 outputs the charging time of the EV, that is, a charging schedule via the output unit 14. Here, in addition to the output based on the charging time zone information 1007 updated in step S38 or step S37, output is also performed in a case where the charging time zone information is not updated. Hereinafter, a screen displayed according to the output will be described.

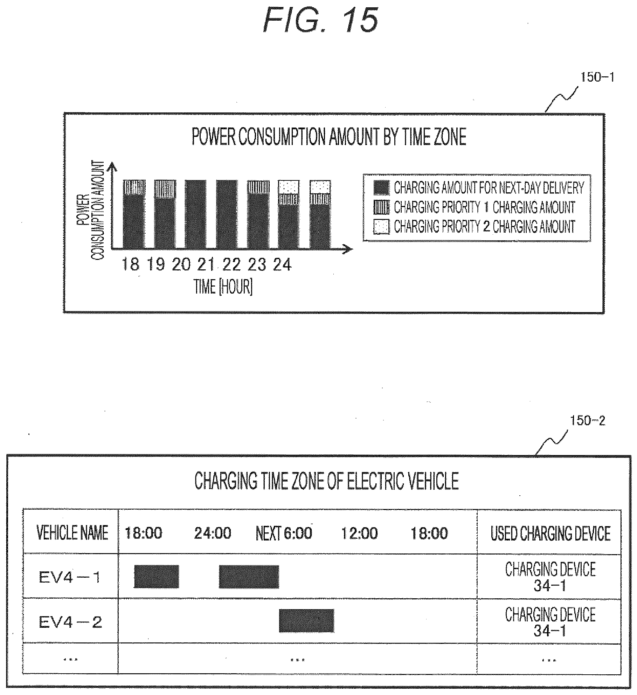

FIG. 15 is a diagram illustrating an example of a display screen according to the present embodiment. In FIG. 15, a display screen 150-1 displays a power consumption amount by time zone. More specifically, on the display screen 150-1, a bar graph showing the power consumption amount for each charging priority in each time zone and the total thereof is displayed. As a result, the administrator or the employee of the courier can grasp the power consumption amount in each time zone. Note that the power amount threshold such as the contract power amount may be displayed together with the graph. Furthermore, as illustrated in FIG. 14A and FIG. 14B, a graph showing the power consumption amount of each EV 40 may be displayed.

In addition, in FIG. 15, a display screen 150-2 displays a charging time zone of an electric vehicle, that is, each EV 40. More specifically, on the display screen 150-1, a charging time is indicated by a black chart for each EV 40. Furthermore, a used charging device is shown for each EV.

The description of the charging time zone information creation processing, the power consumption amount calculation processing, and the charging time zone information change processing ends as above. However, in the charging time zone information change processing (step S3) , the charging time zone information 1007 may be changed by graphically moving the charging amount (part of graph, chart) according to the operation on the above-described display screen via the input unit 11. For example, when the charging amount C1 and the charging amount C2 are moved from FIG. 14A to FIG. 14B, the charging time zone information change unit 123 updates the charging time zone information 1007. Note that the operation via the input unit 11 is an operation on the input device 160 illustrated in FIG. 3, which is an example of the input unit 11, or an operation on the administrator terminal group 2, the base terminal 32, or the tablet terminal 33. Then, the input unit 11 receives the operation on the administrator terminal group 2, the base terminal 32, or the tablet terminal 33.

Next, details of the update processing in step S9 of FIG. 12 will be described. FIG. 16 is a flowchart illustrating details of the update processing according to the present embodiment. First, in step S91, the management unit 13 receives the charging amount (actual measurement value) notified in step S7 via the input unit 11.

In step S92, the management unit 13 determines whether a charging amount for an update target has been received. Specifically, the determination can be made based on whether all the charging amounts corresponding to the charging time zone information 1007 notified in step S4 have been received, whether a predetermined cycle has ended, or the like. As a result, in a case where the charging amount has not been received (No), the process returns to step S91 and waits for reception. In addition, in a case where charging amount has been received (Yes), the process proceeds to step S93.

In addition, in step S93, the management unit 13 compares the received charging amount with the necessary charging amount of the corresponding charging time zone information 1007. That is, the charging amount required in the charge schedule (necessary charging amount) is compared with the actual charging amount (received charging amount). As a result, in a case where a difference there of is equal to or less than a predetermined difference threshold (the difference is small) , the update is not performed and the process is ended. In addition, in a case where the difference is larger than the predetermined difference threshold (the difference is large) , the process proceeds to step S94. Note that "0" may also be used as the difference threshold.

In addition, in step S94, according to the above-described difference, the management unit 13 updates the corresponding information, that is, at least one of the delivery course information 1001, the delivery power variation information 1002, or the vehicle information 1003. In a case where the delivery course information 1001 is updated, the power consumption amount is updated. For example, in a case where the received charging amount is large, the power consumption amount is increased by an amount corresponding to the above-described difference.

In addition, in the management unit 13, in a case where a situation when the charging is being executed corresponds to a variation reason, the management unit 13 updates the delivery power variation information 1002. In this case, the power variation rate of the corresponding variation reason is updated according to the difference.

Furthermore, the management unit 13 may update the remaining power rate of the vehicle information 1003 according to the difference. These updates are preferably executed at a predetermined cycle. In addition, the processing may be executed in real time processing every time the charging amount is received.

Furthermore, the update processing in step S9 may be performed as follows. In step S7, the management unit 13 receives a travel track record of the EV 40 via the input unit 11. The travel track record includes, for example, a travel distance, a speed (hourly, average, or the like), a stop time, and the like of the EV 40. In addition, the management unit 13 decomposes the travel track record into the power consumption amount for each variation reason. Then, the management unit 13 compares the power consumption amount for each variation reason, and updates the charging priority of the delivery power variation information 1002 according to a result thereof.

As a result, it is possible to review the necessary charging amount for the vehicle/delivery course assignment information 1005, the vehicle/delivery power variation information 1006, and the charging time zone information 1007, that is, to set a value in accordance with an actual situation.

Note that the present invention is not limited to the above-described embodiment, and includes various modifications. For example, the present embodiment has been described in detail for easy understanding of the present invention, and is not necessarily limited to those having all the described configurations. Furthermore, the target also includes an electric vehicle other than the courier. For example, an electric vehicle of a multi-unit residential building and an electric vehicle of a transportation service provider such as a taxi and a bus are also included. Furthermore, processing for charging a device and a facility other than the electric vehicle is also included. For example, a power storage device or the like at each home can also be targeted.

In addition, some or all of the above-described configurations, functions, processing units, processing means, and the like may be realized by hardware, for example, by designing with an integrated circuit. In addition, each of the above-described configurations, functions, and the like may be achieved by software by a processor interpreting and executing a program for achieving each function. Information such as a program, a table, and a file for achieving each function can be stored in a recording device such as a memory, a hard disk, and a solid state drive (SSD), or a recording medium such as an IC card, an SD card, and a DVD.

In addition, the control lines and the information lines indicate what is considered to be necessary for the description, and do not necessarily indicate all the control lines and the information lines on the product. In practice, it may be considered that almost all the configurations are connected to each other.

### Reference Signs List

- 1: vehicle management system
- 10: electric vehicle charging management device
- 11: input unit
- 12: charging time zone determination unit
- 121: charging time zone information creation unit
- 122: power consumption amount calculation unit
- 123: charging time zone information change unit
- 13: management unit
- 14: output unit
- 100: delivery management device
- 101: input unit
- 102: vehicle/delivery course assignment unit
- 103: output unit
- 1000: database
- 1001: delivery course information
- 1002: delivery power variation information
- 1003: vehicle information
- 1004: charging facility information
- 1005: vehicle/delivery course assignment information
- 1006: vehicle/delivery power variation information
- 1007: charging time zone information
- 1008: time zone-based power consumption amount information
- 2: administrator terminal group
- 3: charging base
- 31: charge control device
- 32: base terminal
- 33: tablet terminal
- 34: charging device
- 40: EV

## Claims

1. An electric vehicle charging management device that manages charging for a plurality of electric vehicles, the electric vehicle charging management device comprising:
an input unit that receives travel course information indicating travel schedules of the plurality of electric vehicles, vehicle information indicating performance regarding charging for the plurality of electric vehicles, and charging facility information indicating charging performance of a charging facility that charges the plurality of electric vehicles;
a charging time zone information creation unit that
calculates an execution charging amount for each of the plurality of electric vehicles by using the travel course information and the vehicle information,
calculates an execution charging time for the plurality of electric vehicles by using the execution charging amount and the charging facility information, and
creates charging time zone information indicating a charging schedule for each of the plurality of electric vehicles on a basis of the execution charging time;
a power consumption amount calculation unit that calculates time zone-based power consumption amount information indicating a power consumption amount in a predetermined unit of management including the execution charging amount in each of a plurality of time zones, on a basis of the charging time zone information; and
a charging time zone information change unit that
specifies, from the plurality of time zones, a maximum time zone that is a time zone with a largest power consumption amount among the power consumption amounts,
selects a changing target electric vehicle of charging in the maximum time zone from the plurality of electric vehicles, and
changes the charging time zone information by changing charging for the selected changing target electric vehicle in the maximum time zone.

2. The electric vehicle charging management device according to claim 1, wherein
the change of charging for the changing target electric vehicle is
a shift from the maximum time zone to another time zone, or
a stop of the charging for the changing target electric vehicle in the maximum time zone.

3. The electric vehicle charging management device according to claim 2, wherein
the charging time zone information change unit
is capable of securing continuity of the charging of the changing target electric vehicle, based on a shift destination candidate time zone in the shift, and
executes the shift in a case where a power consumption amount in the maximum time zone when shifted is larger than a power consumption amount in the shift destination candidate time zone.

4. The electric vehicle charging management device according to claim 3, wherein
the charging time zone information change unit
is capable of securing the continuity of the charging of the changing target electric vehicle, based on the shift destination candidate time zone in the shift, and
executes the stop of the charging in the maximum time zone in a case where the power consumption amount in the maximum time zone when shifted is equal to or less than the power consumption amount in the shift destination candidate time zone.

5. The electric vehicle charging management device according to claim 1, further comprising:
a management unit that manages information used in the electric vehicle charging management device,
wherein the charging time zone information creation unit further creates the charging time zone information by using delivery power variation information,
the input unit receives an actual measurement value indicating an amount of charging executed on the plurality of electric vehicles, and
the management unit updates at least one of the delivery power variation information, the travel course information, or the vehicle information by using the received actual measurement value.

6. An electric vehicle charging management method for managing charging for a plurality of electric vehicles by using an electric vehicle charging management device, the method comprising:
receiving, by an input unit, travel course information indicating travel schedules of the plurality of electric vehicles, vehicle information indicating performance regarding charging for the plurality of electric vehicles, and charging facility information indicating charging performance of a charging facility that charges the plurality of electric vehicles;
by a charging time zone information creation unit,
calculating an execution charging amount for each of the plurality of electric vehicles by using the travel course information and the vehicle information,
calculating an execution charging time for the plurality of electric vehicles by using the execution charging amount and the charging facility information, and
creating charging time zone information indicating a charging schedule for each of the plurality of electric vehicles on a basis of the execution charging time;
calculating, by a power consumption amount calculation unit, time zone-based power consumption amount information indicating a power consumption amount in a predetermined unit of management including the execution charging amount in each of a plurality of time zones, on a basis of the charging time zone information; and
by a charging time zone information change unit,
specifying, from the plurality of time zones, a maximum time zone that is a time zone with a largest power consumption amount among the power consumption amounts,
selecting a changing target electric vehicle of charging in the maximum time zone from the plurality of electric vehicles, and
changing the charging time zone information by changing charging for the selected changing target electric vehicle in the maximum time zone.

7. The electric vehicle charging management method according to claim 6, wherein
the change of charging for the changing target electric vehicle is
a shift from the maximum time zone to another time zone, or
a stop of the charging for the changing target electric vehicle in the maximum time zone.

8. The electric vehicle charging management method according to claim 7, wherein
the charging time zone information change unit
is capable of securing continuity of the charging of the changing target electric vehicle, based on a shift destination candidate time zone in the shift, and
executes the shift in a case where a power consumption amount in the maximum time zone when shifted is larger than a power consumption amount in the shift destination candidate time zone.

9. The electric vehicle charging management method according to claim 8, wherein
the charging time zone information change unit
is capable of securing the continuity of the charging of the changing target electric vehicle, based on the shift destination candidate time zone in the shift, and
executes the stop of the charging in the maximum time zone in a case where the power consumption amount in the maximum time zone when shifted is equal to or less than the power consumption amount in the shift destination candidate time zone.

10. The electric vehicle charging management method according to claim 6, wherein
the electric vehicle charging management device further includes a management unit that manages information used in the electric vehicle charging management device,
the charging time zone information creation unit further creates the charging time zone information by using delivery power variation information,
the input unit receives an actual measurement value indicating an amount of charging executed on the plurality of electric vehicles, and
the management unit updates at least one of the delivery power variation information, the travel course information, or the vehicle information by using the received actual measurement value.

11. A program for causing an electric vehicle charging management device that is a computer and manages charging for a plurality of electric vehicles to function as:
an input unit that receives travel course information indicating travel schedules of the plurality of electric vehicles, vehicle information indicating performance regarding charging for the plurality of electric vehicles, and charging facility information indicating charging performance of a charging facility that charges the plurality of electric vehicles;
a charging time zone information creation unit that
calculates an execution charging amount for each of the plurality of electric vehicles by using the travel course information and the vehicle information,
calculates an execution charging time for the plurality of electric vehicles by using the execution charging amount and the charging facility information, and
creates charging time zone information indicating a charging schedule for each of the plurality of electric vehicles on a basis of the execution charging time;
a power consumption amount calculation unit that calculates time zone-based power consumption amount information indicating a power consumption amount in a predetermined unit of management including the execution charging amount in each of a plurality of time zones, on a basis of the charging time zone information; and
a charging time zone information change unit that
specifies, from the plurality of time zones, a maximum time zone that is a time zone with a largest power consumption amount among the power consumption amounts,
selects a changing target electric vehicle of charging in the maximum time zone from the plurality of electric vehicles, and
changes the charging time zone information by changing charging for the selected changing target electric vehicle in the maximum time zone.

12. The program according to claim 11, wherein
the change of charging for the changing target electric vehicle is
a shift from the maximum time zone to another time zone, or
a stop of the charging for the changing target electric vehicle in the maximum time zone.

13. The program according to claim 12, wherein
the charging time zone information change unit
is capable of securing continuity of the charging of the changing target electric vehicle, based on a shift destination candidate time zone in the shift, and
executes the shift in a case where a power consumption amount in the maximum time zone when shifted is larger than a power consumption amount in the shift destination candidate time zone.

14. The program according to claim 13, wherein
the charging time zone information change unit
is capable of securing the continuity of the charging of the changing target electric vehicle, based on the shift destination candidate time zone in the shift, and
executes the stop of the charging in the maximum time zone in a case where the power consumption amount in the maximum time zone when shifted is equal to or less than the power consumption amount in the shift destination candidate time zone.

15. The program according to claim 11, wherein
the electric vehicle charging management device further includes a management unit that manages information used in the electric vehicle charging management device,
the charging time zone information creation unit further creates the charging time zone information by using delivery power variation information,
the input unit receives an actual measurement value indicating an amount of charging executed on the plurality of electric vehicles, and
the management unit updates at least one of the delivery power variation information, the travel course information, or the vehicle information by using the received actual measurement value.
